# EUROPEAN PATENT APPLICATION

(11) **EP 4 672 099 A1**
(43) Date of publication of application: **31.12.2025**
(21) Application number: 24275074.3
(22) Date of filing: 25.06.2024
(51) Int. Cl.: G06N 20/20

(54) **AEROSPACE SYSTEMS**

(71) Applicant: ARINC Incorporated, Annapolis, MD 21401 (US)
(72) Inventor: Piyush, Yadav, Cork (IE)
(74) Representative: Dehns

(57) **Abstract**

An aerospace system 100 is provided, comprising a plurality of peripheral devices 102 and a central device 104 operable to communicate with the plurality of peripheral devices. The central device is arranged to receive information describing one or more machine learning models from an external source 106 and distribute said one or more machine learning models to the plurality of peripheral devices. Each peripheral device is arranged to obtain input data, apply a machine learning model of the one or more machine learning models to the input data to produce output data, and send said output data to the central device.

## Description

### Technical Field

The present disclosure relates to aerospace systems and methods of operating aerospace systems

### Background

Aircraft and other aerospace systems often feature complex electrical systems, including potentially hundreds or thousands of electrical sensors that all gather data during operation. Microcontroller units (MCUs) are often used to collect, store and forward these data to central computing systems for analysis. For instance, MCUs may gather vast quantities of data from sensors as an aircraft operates, and then download this to a remote analysis system when the aircraft lands to gain insight into aircraft performance (e.g. to detect when preventative maintenance is needed on one or more parts of the aircraft). This analysis often utilises one or more machine learning models (also referred to as machine learning algorithms) such as neural networks to produce useful feedback and insights.

Gathering, processing and forwarding the large volumes of data involved to a remote or central processor for analysis can allow for the execution of sophisticated machine learning models with large memory, processing and power requirements. However, gathering and forwarding the data for remote processing can also require relatively large amounts of energy and communications infrastructure, and can result in long delays between the data being gathered and useful insights being produced. It has therefore been proposed to instead implement machine learning algorithms at or nearer to the devices that do the data collection. These devices are sometimes referred to as "edge" devices, and performing machine learning (ML) on these devices referred to as "edge ML" or "on-device ML". However, the potentially large numbers of devices and device types involved (e.g. over an entire fleet of aircraft) and the limitations on communication bandwidth and power that typically arise in aerospace environments mean that it can be difficult to efficiently deploy, monitor and update these machine learning models, hindering their use.

An improved approach may be desired.

### Summary

According to a first aspect of the present disclosure there is provided an aerospace system comprising:
a plurality of peripheral devices; and
a central device operable to communicate with the plurality of peripheral devices;
wherein the central device is arranged to receive information describing one or more machine learning models from an external source and distribute said one or more machine learning models to the plurality of peripheral devices; and wherein each peripheral device is arranged to obtain input data, apply a machine learning model of the one or more machine learning models to the input data to produce output data, and send said output data to the central device.

According to a second aspect of the present disclosure there is provided a method of operating an aerospace system, the method comprising:
a central device receiving information describing one or more machine learning models from an external source and distributing said one or more machine learning models to a plurality of peripheral devices; and
each of the plurality of peripheral devices obtaining input data, applying a machine learning model of the one or more machine learning models to the input data to produce output data and sending said output data to the central device.

Thus, it will be appreciated by those skilled in the art that because the central device provides coordinates the distribution of the machine learning model(s) to the peripheral devices and receives output data produced by the machine learning models being run on said devices, it can the effectiveness, reliability and convenience with which machine learning insights can be gained in potentially complex aerospace systems. For instance, examples of the present disclosure may enable machine learning models to be conveniently deployed, maintained and monitored at the edge in complex systems with large numbers of peripheral devices (e.g. modern aircraft) without requiring extensive manual intervention.

Examples of the present disclosure may be used with different types of machine learning model. Indeed, different peripheral devices of the plurality may be arranged to applying different machine learning models to input data.

In some examples, the one or more machine learning models comprise an artificial neural network (ANN). In some examples, additionally or alternatively, the one or more machine learning models comprise a classical machine learning (classical ML) model such as a linear model, a support vector machine, a decision tree, or a random forest. The one or more machine learning models may be trained, e.g. using training data comprising sample input data and corresponding output data. Training a machine learning model may comprise adjusting the structure and/or one or more parameters of the machine learning model to fit the training data. Information describing a machine learning model in one or more examples may comprise source code (e.g. written in C or micropython) and/or compiled machine code.

The external source may comprise a source that is entirely separate to the aerospace system, i.e. not comprised by any of the devices forming the aerospace system. For instance, in examples where the aerospace system is provided on or comprised by an aircraft, the external source may be separate to the aircraft. The external source may comprise a computer-readable storage medium. The external source may comprise a computer server.

Examples of the present disclosure may be used to deploy machine learning models to the peripheral devices as part of an initial commissioning process (i.e. the first machine learning models utilised by the peripheral devices). For instance, the central device may be arranged to distribute said one or more machine learning models to the plurality of peripheral devices part of an initial commissioning process. Additionally or alternatively, the machine learning models may be new or updated machine learning models for replacing or updating existing models on the peripheral devices. Accordingly, the central device may be arranged to distribute said one or more machine learning models to the plurality of peripheral devices to replace or update one or more existing machine learning models on the peripheral devices.

The central device may be arranged to receive the information describing one or more machine learning models from the external source over a wired data connection (e.g. whilst an aircraft comprising the aerospace system is parked at an airport). Additionally or alternatively, the central device may be arranged to receive the information describing one or more machine learning models from the external source over a wireless data connection ("over-the-air"). The wireless data connection may be satellite connection. The central device may comprise a radio communication subsystem arranged to receive the information via a radio communication subsystem such as a satellite communication system (which may also be part of the aerospace system). The use of satellite communication may be particularly useful as it may allow for new or updated models to be received and distributed whilst the aircraft is in flight.

In a set of examples, the central device is arranged to communicate a machine learning model to a peripheral device in response to a request from said peripheral device. In other words, the central device may distribute the machine learning model(s) by monitoring for and responding to pull requests from the peripheral devices. The peripheral devices may be arranged to intermittently (e.g. periodically) send a request to the central device to check if a new or updated model is available. In such examples the peripheral devices may be considered to initiate the distribution of the machine learning model(s). In some examples, the central device may be arranged to cache information describing one or more machine learning models until a request from an appropriate peripheral device is received.

Additionally or alternatively, the central device may be arranged to unilaterally transmit a machine learning model to a peripheral device(s), i.e. the central device may initiate the distribution. In other words, the central device may distribute the machine learning model(s) by pushing the models to peripheral devices. The central device may be arranged to push a machine learning model to an appropriate peripheral device as soon as it is received from the remote source. This may promote use of the most up-to-date models in the system.

In one or more non-limiting examples one or more of the peripheral devices comprises an embedded microcontroller. In one or more non-limiting examples one or more of the peripheral devices comprises an ESP Eye, Arduino ESP 32,

Raspberry Pi Pico or TI 3235SF. The central device may comprise an aircraft interface device (AID)

In a set of examples, one or more of the peripheral devices comprises a sensor device arranged to obtain sensor data (i.e. the input data may comprise sensor data). For instance, in a set of non-limiting examples the plurality of peripheral devices comprises one or more of a temperature sensor, a pressure sensor, an accelerometer, a gyroscope, a microphone, a motion sensor or a camera.

Different peripheral devices of the plurality may be arranged to obtain different types and/or quantities of input data. For instance, the input data may comprise measurements of physical phenomena (e.g. where the peripheral device is a sensor device), or the input data may comprise data produced by another device (e.g. log or fault data).

Similarly, different peripheral devices of the plurality may be arranged to produce different types and/or quantities of output data. For instance, the output data may comprise a classification, such as gesture or fall detection from camera data or speech classification from microphone data. Additionally or alternatively, the output data may comprise a prediction such as a remaining useful life (RUL) estimation for a given component.

In a set of examples, the aerospace system comprises a user interface (e.g. a display), and the central device is arranged to forward the output data or monitoring data derived from the output data to the user interface (e.g. for outputting on the display). This may allow a user (e.g. an aircraft pilot) to conveniently obtain insights into the data collected by the peripheral devices.

In some examples, additionally or alternatively, the central device may be arranged to forward the output data or monitoring data derived from the output data to the external source. The output data or monitoring data may be used by the external source for remote analysis of the aerospace system. In a set of examples, output data produced by one or more of the peripheral devices (or monitoring data derived therefrom) is analysed (e.g. by the external source) to assess the performance of a machine learning model applied by the one or more peripheral devices. For instance, the output data may be subjected to statistical analysis to determine the presence and/or magnitude of drift in the data (i.e. the output data differing from an expected distribution of output data such as a distribution of training data). Drift can, for instance, occur due to device failure (e.g. sensor failure), environmental changes or the addition of new devices or functionalities. Data drift can be one of the main causes of model failure and so it can be beneficial to identify it as early as possible.

In a set of examples, additionally or alternatively, output data produced by one or more of the peripheral devices (or monitoring data derived therefrom) is used to update (e.g. improve) a machine learning model applied by the one or more peripheral devices. In a set of examples, a machine learning model received and distributed by the central device comprises an updated machine learning model which has been updated based on output data previously produced by one or more of the peripheral devices. In some examples, the machine learning model may be updated based on an assessed performance of the machine learning model, e.g. to correct for determined drift. Updating the machine learning model may comprise subjecting the model to additional training and/or making one or more adjustments to a structure and/or parameter of the model. In a set of examples the performance of one or more of the machine learning models is repeatedly (e.g. regularly or irregularly) assessed and updated as necessary.

Examples of the present disclosure may be particularly suited to aerospace systems having large numbers of peripheral devices. The aerospace system may comprise ten or more peripheral devices, 50 or more peripheral devices or even 100 or more peripheral devices. The aerospace system may, for instance, be provided on an aircraft where it is useful to monitor numerous environmental factors (e.g. with suitable sensors) as well as the status and operation of various on-board devices such as flight control devices, avionics devices and passenger cabin devices.

As mentioned above, examples of the present disclosure may be particularly beneficial when applied to complex systems with large numbers of peripheral devices such as aircraft. Thus, when viewed from a further aspect the present disclosure provides an aircraft comprising an aerospace system as disclosed herein.

Features of any aspect or example described herein may, wherever appropriate, be applied to any other aspect or example described herein. Where reference is made to different examples, it should be understood that these are not necessarily distinct but may overlap.

### Detailed Description

One or more non-limiting examples will now be described, by way of example only, and with reference to the accompanying figures in which:
Figure 1 is a schematic diagram of an aerospace system according to an example of the present disclosure; and
Figure 2 is a flow diagram illustrating a method of operating the system of Figure 1.

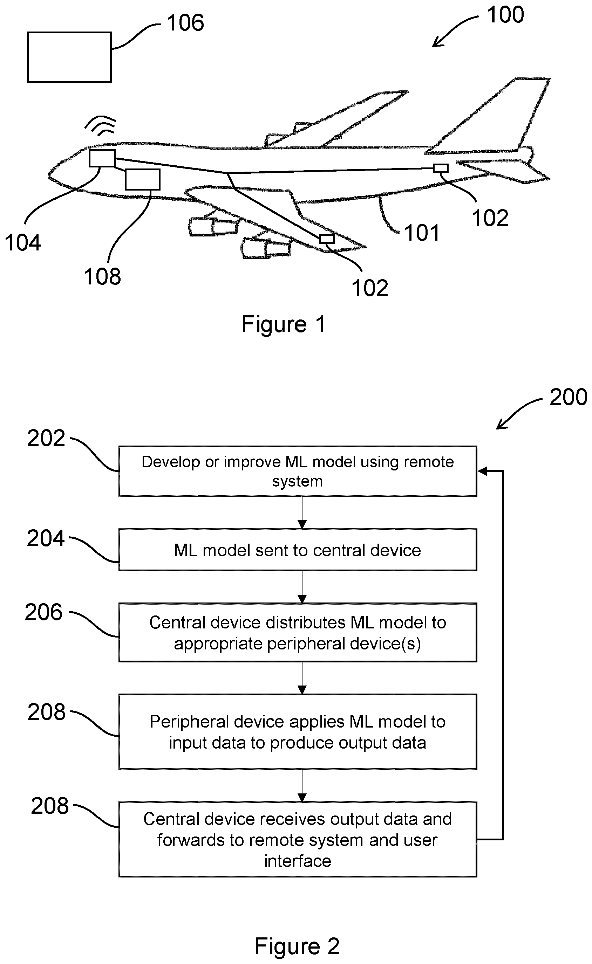

Figure 1 shows an aerospace system 100 comprising an aircraft 101 with a plurality of peripheral devices 102 and a central device 104 in communication with the plurality of peripheral devices 102. The central device 104 is also in communication with a remote system 106 (e.g. via satellite communication). The central device 104 may comprise an aircraft interface device (AID). The aircraft 101 also comprises a user interface 108 (e.g. a display in the cockpit).

The peripherical devices 102 gather data as the aircraft 101 operates. For instance, one or more of the peripheral devices 102 may comprise a sensor such as a temperature sensor for gathering temperature data, an accelerometer for gathering movement data, a microphone for gathering sound data or a camera for gathering image data. Although only two peripheral devices 102 are illustrated, the aircraft 101 may in practice comprise a large number of peripheral devices 102 (e.g. fifty or more) which collectively produce a very large quantity of data as the aircraft 101 operates.

The data gathered by the peripheral devices 102 may be usefully analysed to identify faults or to trigger preventative maintenance of aircraft parts. Additionally or alternatively, the data gathered by the peripheral devices 102 may also be analysed to control one or more parts of the aircraft (e.g. motion sensor data may be analysed to identify user gestures for controlling a touch-free lavatory on the aircraft or sound data may be analysed to identify voice commands from a pilot).

This analysis could be done by the central device 104 and/or the remote system 106, as these devices may comprise powerful processing capabilities and large memory resources. However, this would require the communication of all of the data gathered by the peripheral devices 102 to the central device 104 (and potentially on to the remote system 106), which would need significant communications infrastructure (e.g. satellite communication bandwidth) to be in place and introduce delays between the data being gathered and the analysis being performed.

Therefore, each of the peripheral devices 102 is configured to perform some analysis itself of the data it gathers. This is done by the peripheral devices 102 executing machine learning models (also referred to as machine learning algorithms). Machine learning models that may be employed include artificial neural networks of varying complexity, and classical machine learning algorithms such as linear models, support vector machine, decision trees, random forest, boosting.

Each device 102 may employ a different machine learning model and the models employed may be of different types and of varying complexity (e.g. based on the nature of the data being analysed and/or the desired outputs). Performing machine learning analysis on the peripheral devices 102 can aid the production of useful analysis results without needing large communication bandwidth or incurring significant latencies between the data gathering and analysis. This is sometimes referred to employing machine learning (ML) at the "edge", or "edge ML".

Machine learning models such as neural networks are typically developed using highly capable hardware (e.g. with significant memory and processing capabilities). This hardware is often impractical to implement on the peripheral devices 102 due to size, weight, cost and/or power constraints. Therefore, it is useful to be able to adapt machine learning models for execution on the peripheral devices 102.

However, the potentially large numbers of devices involved and the limitations on communication bandwidth and power that typically arise in aerospace environments mean that it can be difficult to efficiently utilise, maintain and update these machine learning models. To alleviate some of these issues, the central device 104 manages the models used by the peripheral devices 102 and the output data they produce.

Figure 2 shows a method 200 of operating the system 100 of Figure 1. In a first step 202, the remote system 106 is used to produce a new or updated machine learning model for deployment in one or more of the peripheral devices 102. As will be explained in more detail below, the model development or update process may utilise output data from peripheral devices 102 (e.g. data produced by a previous version of the model). The model development or update process may comprise initial or further training of the machine learning model. The model is adapted for execution on the intended peripheral device(s) 102, e.g. adapted to hardware limitations of the peripheral device(s) 102.

In step 204, information describing the new or updated machine learning model (e.g. source code or compiled computer machine code) is transmitted to the central device 104 of the aircraft 101. This transmission may be done over a wired data connection, e.g. when the aircraft is parked at an airport. Alternatively the transmission may be done "over-the-air" whilst the aircraft is in use (e.g. by satellite communication).

In step 206, the central device 104 coordinates the distribution of the new or updated ML model to the appropriate peripheral devices. This may involve the central device 104 proactively pushing the new model to peripheral devices 102, with the central device 104 initiating the communication of the model to the peripheral devices 102.

Alternatively, the central device 104 may transmit the new model to a peripheral device 102 in response to a request (i.e. with the peripheral device 102 initiating the communication). The peripheral devices 102 may be arranged to intermittently or periodically send requests for the central device 104 to check for any new or updated models. In such cases, new or updated models received from the remote system 106 may be cached by the central device 104 until a request from an appropriate peripheral device 102 is received.

In step 208, the peripheral devices 102 apply the new or updated ML model to input data they have gathered (e.g. sensor data) to produce output data. For instance, one or more of the peripheral devices 102 may gather data on the operation of an engine of the aircraft 101 and one or more ML models which interpret this engine data to produce output data. The output data may comprise a determination of whether a fault is present in the engine which requires manual inspection, or an estimated remaining useful life (RUL) of the engine.

In step 210, the central device 104 receives output data from the peripheral devices 102 (e.g. the engine fault determination or RUL) and forwards it to the remote system 106. The remote system 106 may use the output data to update an existing ML model (returning to in step 202). The central device 104 also provides some or all of the output data, or monitoring data derived from the output data, to the user interface 108. This may provide the pilots of the aircraft 101 with up-to-date insights on the operation of the aircraft 101, without needing to wait for remote analysis or manually interpret vast quantities of raw input data.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. An aerospace system comprising:
a plurality of peripheral devices; and
a central device operable to communicate with the plurality of peripheral devices;
wherein the central device is arranged to receive information describing one or more machine learning models from an external source and distribute said one or more machine learning models to the plurality of peripheral devices; and
wherein each peripheral device is arranged to obtain input data, apply a machine learning model of the one or more machine learning models to the input data to produce output data, and send said output data to the central device.

2. The aerospace system of claim 1, wherein the central device is arranged to distribute said one or more machine learning models to the plurality of peripheral devices as part of an initial commissioning process.

3. The aerospace system of claim 1 or 2, wherein the central device is arranged to distribute said one or more machine learning models to the plurality of peripheral devices to replace or update one or more existing machine learning models on the peripheral devices.

4. The aerospace system of any preceding claim, wherein the central device is arranged to communicate a machine learning model to a peripheral device in response to a request from said peripheral device.

5. The aerospace system of claim 6, wherein the peripheral devices are arranged to intermittently send a request to the central device to check if a new or updated machine learning model is available.

6. The aerospace system of any preceding claim, wherein the central device is arranged to unilaterally transmit a machine learning model to an appropriate peripheral device.

7. The aerospace system of claim 6, arranged to push a machine learning model to an appropriate peripheral device as soon as it is received from the remote source.

8. The aerospace system of any preceding claim, wherein one or more of the peripheral devices comprises an embedded microcontroller.

9. The aerospace system of any preceding claim, wherein one or more of the peripheral devices comprises a sensor device arranged to obtain sensor data.

10. The aerospace system of any preceding claim, wherein different peripheral devices of the plurality are arranged to obtain different types and/or quantities of input data and to produce different types and/or quantities of output data,.

11. The aerospace system of any preceding claim, further comprising a user interface, wherein the central device is arranged to forward the output data or monitoring data derived from the output data to the user interface.

12. The aerospace system of any preceding claim, wherein the central device is arranged to forward the output data or monitoring data derived from the output data to the external source.

13. A method of operating an aerospace system, the method comprising:
a central device receiving information describing one or more machine learning models from an external source and distributing said one or more machine learning models to a plurality of peripheral devices; and
each of the plurality of peripheral devices obtaining input data, applying a machine learning model of the one or more machine learning models to the input data to produce output data and sending said output data to the central device.

14. The method of claim 13, comprising analysing output data produced by one or more of the peripheral devices or monitoring data derived therefrom to assess the performance of a machine learning model applied by the one or more peripheral devices.

15. The method of claim 13 or 14, comprising using output data produced by one or more of the peripheral devices or monitoring data derived therefrom to update a machine learning model applied by the one or more peripheral devices.
